# EUROPEAN PATENT SPECIFICATION

(11) **EP 2 915 728 B1**
(45) Date of publication and mention of the grant of the patent: **05.10.2016**
(21) Application number: 14158363.3
(22) Date of filing: 07.03.2014
(51) Int. Cl.: B62J 7/04, B62J 9/00

(54) **Straddle-type vehicle with load supporting structure**
Fahrzeug mit Sattel mit Lasttragestruktur
Véhicule de type à enfourcher avec structure de support de charge

(43) Date of publication of application: 09.09.2015
(73) Proprietor: Yamaha Hatsudoki Kabushiki Kaisha, Iwata-shi, Shizuoka 438-8501 (JP)
(72) Inventor: Monieri, Luca, 20050 Gerno di Lesmo (MI) (IT)
(74) Representative: Grünecker Patent- und Rechtsanwälte PartG mbB

(56) References cited:
- EP-A1- 0 603 016
- EP-A2- 1 470 995
- DE-C- 408 991
- GB-A- 2 264 274
- JP-A- H01 160 786
- JP-U- H0 373 280
- US-A- 5 558 260
- US-B1- 6 648 408
- US-B1- 6 817 501
- US-B1- 7 275 787

## Description

The present invention relates to a straddle-type vehicle, in particular a motorcycle, in which a structure for supporting a load can be attached to and detached from the vehicle.

Such a vehicle is known from JP 2012-201238.

A straddle-type vehicle according to the preamble of claim 1 is known from document JPH0373280U.

Generally, many motorcycles are provided with a structure for supporting a load which is to be transported on the motorcycle in addition to a rider or the rider and a pillion passenger. Many of these structures are permanently attached to the motorcycle in addition to the seat for the rider and the pillion passenger. Accordingly, either the motorcycle is increased in size, or the seat for the rider and the pillion passenger is reduced in size to accommodate this structure. The former has the effect of reducing the agility of the motorcycle and making it more difficult for the rider to maneuver the motorcycle at low speed and in confined areas. The latter has the effect of reducing the travelling comfort of the rider and the pillion passenger, or may even reduce the size of the seat to such an extent that it is no longer possible to carry a pillion passenger, even if no additional load is being carried.

In order to overcome the problems mentioned above with respect to permanently attached load carrying structures, some motorcycles are now provided with a load carrying structure that can be detached from the motorcycle. The core aspect of these motorcycles is the provision of a bracket on the frame of the motorcycle to which, or from which, the load supporting structure can be attached, or detached.

The motorcycle disclosed in JP 2012-201238 comprises such a bracket, wherein the load supporting structure extends from the bracket to a position behind the pillion seat. A box can be attached to the load supporting structure for carrying an additional load, or the box can be removed and the load supporting structure can be covered with a mat to allow extra space for a pillion passenger. However, the problem with this motorcycle is that the attachment and detachment process is quite complicated, and the bracket needs to have sufficient strength to support all the weight of the load. As such, the bracket is expensive to produce, and a rider is discouraged from attaching and detaching the load supporting structure as often as they may normally like. Accordingly, the present invention is made in view of the foregoing circumstances, and it is an objective of the present invention to provide a straddle-type vehicle with a detachable load supporting structure, which has a simple and inexpensive attachment, yet is light in weight.

According to the present invention, such an objective is achieved by a straddle-type vehicle described within claim 1. Specifically, a straddle-type vehicle of the present invention comprises: a body frame; a seat supported by the body frame as well as a bracket supported by the body frame. A load support frame is detachably connected to the bracket, and the seat comprises at least a seat main portion for a rider. A load support portion is positioned rearward of the seat main portion and supported by the body frame. The load support frame includes a load carrying portion configured to contact with the load support portion.

By providing the load support frame with a load carrying portion configured to contact with the load support portion, it is possible to ensure that the forces generated as a result of various accelerations acting on the load supported by the load support frame are distributed between the bracket and the load support portion. Accordingly, the force on the bracket generated as a direct result of the mass of the load supported by the load support frame is reduced. Consequently, the required size and strength of the bracket can be reduced, further resulting in a reduction in the costs of producing said bracket. Moreover, as the load support frame is detachably connected to the bracket, it is possible to easily and simply attach, and detach, the load support frame to, and from, the body frame of the straddle type vehicle.

Furthermore according to the present invention the load carrying portion is located at the position rearward of the seat main portion and above the load support portion. As such, the load carrying portion can easily transfer the weight of the load to the body frame of the straddle type vehicle, whilst still providing sufficient space for at least the rider of said vehicle.

In accordance with the present invention the load carrying portion comprises a protrusion portion formed on a bottom side of the load carrying portion and configured to protrude toward the load support portion, the protrusion portion having a contact portion formed at its lower end and configured to contact with the load support portion. Hence, the load support frame does not need to be configured to precisely fit on the load carrying portion, thereby allowing easier attachment and detachment.

Further, the load support portion according to the present invention comprises a secondary seat portion for a pillion passenger. Thus, the straddle type vehicle can comfortably carry a pillion passenger when it is not required to carry an additional load, yet when it is necessary to carry the additional load, there is no requirement to remove the secondary seat portion for the pillion passenger. Accordingly, it is easier, simpler and quicker to attach and detach the load support frame. The contact portion of the protrusion portion is preferably configured to contact with the secondary seat portion. Consequently, the protrusion portion can easily deform a cushion element of the seat, thereby transferring the weight of the load more directly to a bottom plate of the seat.

Still further, the bracket preferably has a connecting portion to which the load support frame is detachably connected. As such, the load support frame can be even more easily attached to and detached from the bracket.

Yet further still, the load support frame preferably comprises a shaft portion extending from the connecting portion of the bracket to the load carrying portion. Hence, the load support frame can have a light weight and be easily manufactured. The shaft portion and the load carrying portion are preferably formed integrally with each other. Thus, the load support frame can be even more easily handled by a user/rider during the attachment/detachment process.

Preferably, the shaft portion comprises a shaft insertion portion inserted into the connecting portion. Accordingly, the attachment/detachment process can be even better facilitated by merely requiring a simple insertion process. The shaft insertion portion and the connecting portion preferably have circular cross-sections. Consequently, it is only necessary for the user to axially align the shaft insertion portion with the connecting portion, and no rotational alignment is necessary, thereby simplifying the attachment process even more.

Still further, the connecting portion preferably comprises a bracket insertion portion inserted into the shaft portion. As such, the bracket is smaller and can be produced with an even lighter weight, whilst still retaining the advantages of the attachment/detachment process merely requiring a simple insertion process. The bracket insertion portion and the shaft portion preferably have circular cross-sections. Hence, it is only necessary for the user to axially align the shaft portion with the bracket insert portion, and no rotational alignment is necessary, thereby simplifying the attachment process even more.

Yet further still, the straddle type vehicle preferably further comprises a fixing element configured to prevent any relative sliding movement between the shaft portion and the connecting portion. Thus, after attachment of the load support frame to the bracket by the insertion of the shaft portion or the connecting portion, the load support frame can be easily prevented from any further movement by utilization of the fixing element. The fixing element preferably comprises a bolt that penetrates through both the shaft portion and the connecting portion in a direction intersecting the direction of insertion. Accordingly, the fixing element is an easily procurable, off-the-shelf product than can simply and securely prevent any movement of the load support frame relative to the bracket.

Preferably, the shaft portion comprises a longitudinal shaft portion that extends obliquely rearwards and upwards from the connecting portion to the load carrying portion, when seen in a side view. Consequently, a portion of the forces generated by the load under both the vertical acceleration of gravity and the horizontal accelerations and decelerations of the straddle type vehicle can be transferred to the bracket.

Still further, the bracket is preferably located at a position below the seat. As such, the bracket and the load support frame are less likely to interfere with the rider. The bracket is preferably located below the seat main portion. Hence, the forward extension of the load support frame from the load carrying portion can be ensured. The bracket is preferably located further forward than the load support portion, when seen in a side view. Thus, when the majority of the force generated by the load under the vertical acceleration of gravity is transferred to the load support portion, it can be ensured that the major vector component of the force transferred to the bracket via the load support frame will be horizontal.

More preferably, the bracket is fixed to the body frame using bolts. Accordingly, the bracket itself can be easily attached to and detached from the body frame of the straddle type vehicle. This provides the further advantage of allowing the load supporting structure (the bracket, load support frame and load support portion) to be retrofitted to vehicles that are already in use. The bolts preferably also fix a foot rest of a pillion passenger to the body frame. Consequently, the bracket can be attached to the body frame of the straddle type vehicle without the need to use additional fixing elements, thereby reducing the weight and costs of the load supporting structure.

Further, the load carrying portion preferably comprises a platform attached to the load support frame. As such, the load carrying portion is capable of carrying a variety of differing loads, thereby improving its versatility.

Still further, the load carrying portion comprises a box attached to the load support frame or to the platform. Hence, a plurality of smaller loads can be easily carried at one time, and can be protected from the elements by the box.

In the following, the present invention is explained in greater detail with respect to a preferred embodiment thereof in conjunction with the accompanying drawings, wherein:
- Figure 1:: is a side view of a motorcycle (straddle-type vehicle) according to an embodiment of the present invention;
- Figure 2:: is an exploded partial perspective view of the load support frame, the seat and the frame of the motorcycle of Figure 1;
- Figure 3:: is a vertical cross-section of the load support frame, the seat and the frame depicted in Figures 1 and 2, taken along the line A-A in Figure 1;
- Figure 4:: is an enlarged view of the cross-section Figure 3; and
- Figure 5:: is an exploded perspective view of the load support frame, the platform and the protrusion portion.

Among others, the following reference signs are used in the Figures:
1: Motorcycle (straddle-type vehicle)
2: Body frame
7: Seat
8: Seat main portion for a rider
9: Bracket
10: Load support frame
11: Shaft portion
12: Load carrying portion
13: Protrusion portion
15: Load support portion
16: Secondary seat portion for a pillion passenger
18: Pillion passenger foot rest

A preferred embodiment of the present invention will be described below with reference to the accompanying drawings.

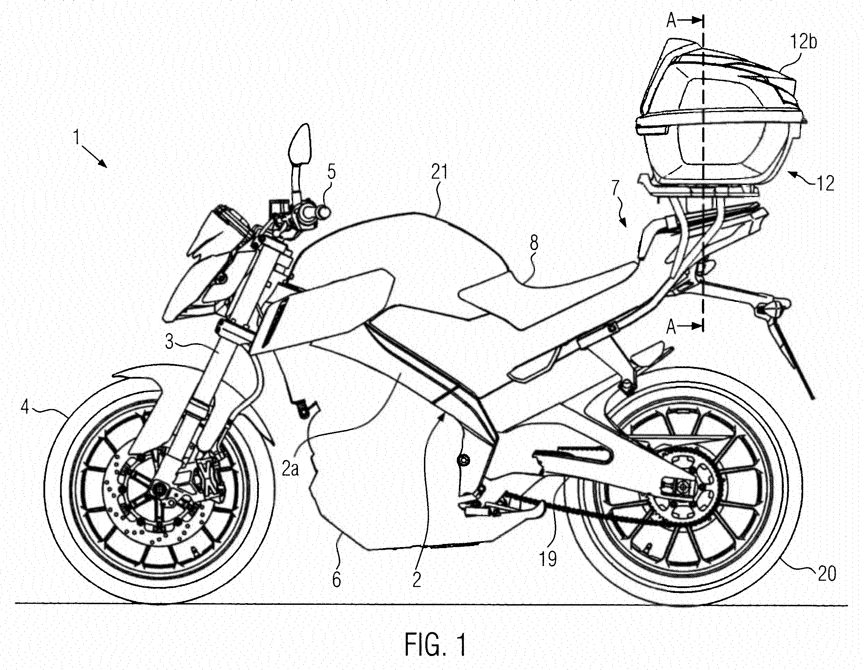

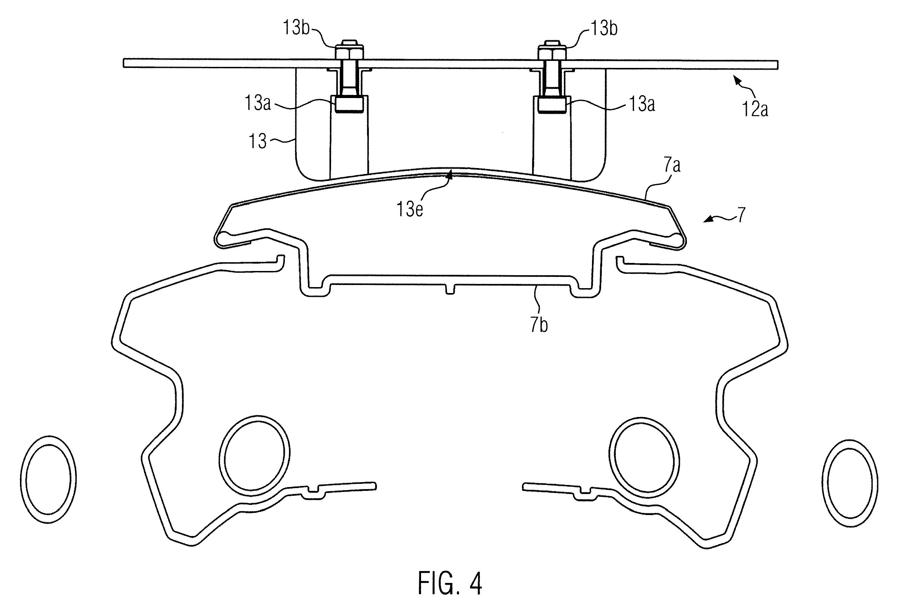

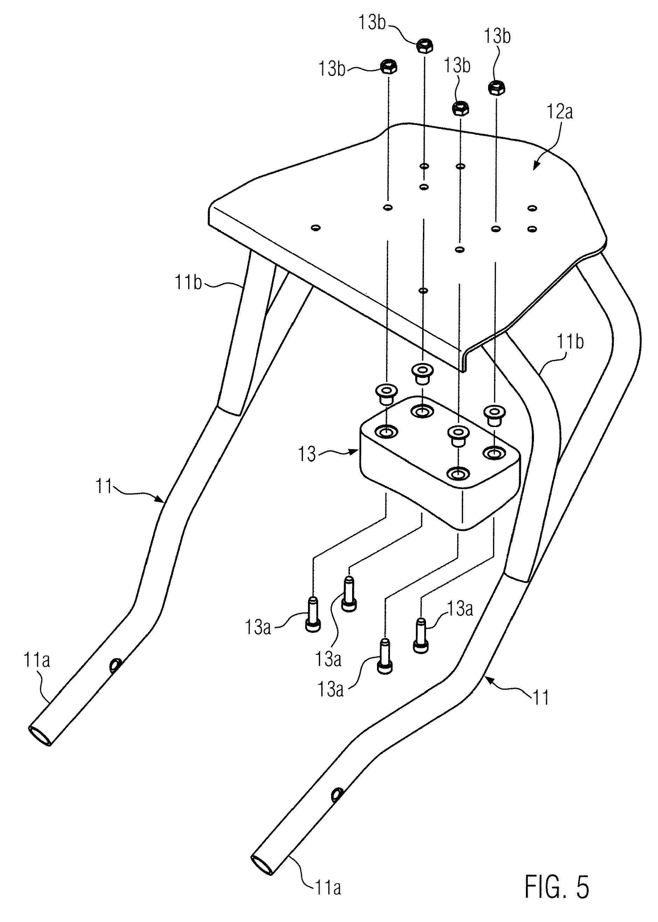

Figures 1 to 5 illustrate a straddle-type vehicle according to a preferred embodiment of the present invention. Therein, in general, a straddle-type vehicle is a motorcycle having a body frame 2 and a seat 7 having a seat main portion 8 on which a rider can be seated straddling the body frame 2 when being seated. Unless otherwise specified, the directional terms "right", "left", "front", "forward", "rear", "backward", "up" and "down" used in this embodiment refer to the right, left, front, forward, rear, backward, up and down directions when viewed by a rider seated on the seat.

In these Figures, a reference numeral 1 designates a motorcycle. The motorcycle 1 has: a body frame 2; a front fork 3, which is supported steerably to the left and right by a head pipe (not shown) located at a front end of the body frame 2, and which places a front wheel 4 and a steering handlebar 5 at a bottom end and a top end of the front fork 3, respectively; a power unit 6, comprising an engine and a gear box, and which is mounted to the body frame 2 at its middle part in the front-rear direction; a trailing suspension arm 19 swingably connected to the body frame 2; a rear wheel 20 provided at a rear end of the trailing suspension arm 19; and a seat 7 comprising a seat main portion 8 for a rider mounted to the body frame 2 above the power unit 6.

The body frame 2 is provided with: a front frame 2a, having left and right front frame sections extending from the head pipe obliquely downwards to the rear; and a rear frame 2b having left and right rear frame sections extending from the left and right front frame sections obliquely upwards below the seat 7 to the rear.

From Figure 1, it can be seen that the power unit 6 is located in an area located between and below the left and right front frame sections. A fuel tank 21 is provided above the front frame 2a and above the power unit 6. The fuel tank 21 is located between the seat 7 and the head pipe supporting the front fork 3.

The seat 7 is a straddle type seat comprising a cushion element 7a provided on a bottom plate 7b. Although not depicted within the Figures, the bottom plate is supported by the body frame. The bottom plate may be directly or indirectly supported by the body frame. The cushion element is configured such that a rider and a pillion passenger may comfortably straddle the seat.

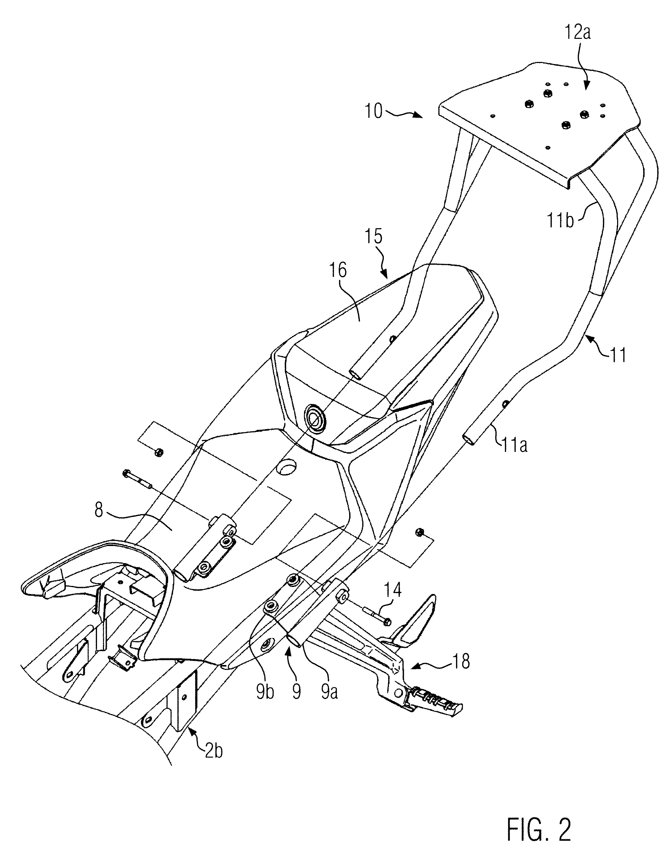

As can be seen from Figures 1 and 2, the seat 7 is divided into 2 portions: a seat main portion 8 for the rider; and a secondary seat portion 16 for the pillion passenger. In an alternative configuration of the present invention, the seat 7 may solely comprise the seat main portion 8.

In the present embodiment, the secondary seat portion 16 is located at a position further rearward and higher than the seat main portion 8. The secondary seat portion 16 is also narrower than the seat main portion 8 in a vehicle widthwise direction. In an alternative configuration of the present invention, the secondary seat portion 16 may be located at the same height as, or even lower than, the seat main portion 8. The secondary seat portion 16 may also be was wide as, or even wider than, the seat main portion 8 in a vehicle widthwise direction.

As mentioned above, the left and right rear frame sections extend obliquely upwards to the rear below the seat 7 from the left and right front frame sections. Although not depicted within the Figures, a bracket 9 is supported on each of the left and right rear frame sections. In the present preferred embodiment, a bracket 9 is directly supported on each of the left and right rear frame sections. Nevertheless, other configurations may be utilized wherein a bracket 9 is indirectly supported on each of the left and right rear frame sections, or even supported on the front frame.

As can be seen from Figure 1, the bracket 9 is located at a position below the seat main portion 8. More specifically, the bracket 9 is located at a position below a rear end of the seat main portion 8. The bracket 9 is also located further forward than a front end of the secondary seat portion 16.

From Figure 2, it can be seen that the bracket 9 comprises a supporting portion 9b supported on the rear frame section, and a connecting portion 9a provided on the supporting portion 9b. In the present preferred embodiment, the supporting portion 9b is formed by a flange portion extending from the rear frame section in a widthwise direction of the motorcycle to the supporting portion 9b located at the outermost end of the flange portion. Specifically, the flange portion of the bracket 9 on the left side of the motorcycle extends from the left rear frame section in a leftward direction to its respective connecting portion 9a, and the flange portion of the bracket 9 on the right side of the motorcycle extends from the right rear frame section in a rightward direction to its respective connecting portion 9a. Nevertheless, other configurations may be utilized in which the connecting portion 9a is provided directly on the rear frame section, on another structural feature, such as a pillion passenger foot rest 18, supported by the body frame 2, or even on the load support frame 10.

The flange portion more specifically comprises a tab portion located above the rear frame. A web portion of the flange portion extends obliquely downwards and outwards from the tab portion in a widthwise direction of the motorcycle. In the present preferred embodiment, the tab portion is formed with two bolt holes. The bolts used to secure the bracket 9 to the rear frame via these bolt holes are the same bolts used to secure the support for the pillion passenger foot rest to the rear frame. Accordingly, the tab portion, the support for the pillion passenger foot rest and the rear frame are bolted together.

The connecting portion 9a is formed by a hollow tubular section attached to the flange portion 9b. In the present preferred embodiment, the hollow tubular section has a circular cross-section and an axial direction that extends obliquely upwards and rearwards. In other words, the hollow tubular section extends basically in parallel with the rear frame section.

In an alternative embodiment of the present invention, cross-sections other than circular can be utilized. Moreover, the orientation of the longitudinal axis need not be parallel to the rear frame section and may vary depending upon a variety of different factors including, inter alia, the location of the bracket 9, the location of the load support portion 15, the configuration of the load support frame 10, etc. In addition, the connecting portion 9a need not even be hollow, and could alternatively comprise a solid projection. However, the arrangement of the connecting portion parallel to the rear frame allows for an almost invisible impression of the bracket 9 if the load support frame 10 is not installed.

As can be taken from Figure 2, the load support frame 10 of the present preferred embodiment comprises a shaft portion 11 that is inserted into the hollow tubular section of the connecting portion 9a of the bracket 9. The shaft portion 11 comprises a longitudinal shaft portion that extends obliquely rearwards and upwards from the connecting portion 9a.

In the present preferred embodiment, the shaft portion 11 is made up of a tubular hollow section that is formed into the required shape by bending. As can be seen in Figure 1, the shaft portion 11 has 2 bent portions when viewed from a side of the motorcycle, these 2 bent portions forming a front section, a middle section, and a rear section. As can be seen in Figure 2, the shaft portion 11 has 3 bent portions when viewed from above, these 2 bent portions forming an initial insertion portion 11 a, a widening portion at the front, an extending portion in the middle, and a narrowing portion at the rear.

The front section of the shaft portion 11, as seen in Figure 1, extends in parallel with the connecting portion 9a of the bracket 9 and comprises the insertion portion 11 a and the widening portion of Figure 2. The insertion portion 11 a is inserted in the connecting portion 9a, and the widening portion extends in parallel with the insertion portion 11 a, from its rear end, when seen in a side view. When seen in plan view, the widening portion is angled in an outward direction such that its rear end is located laterally further outward from the longitudinal centre of the motorcycle than its front end.

The middle section of the shaft portion 11, as seen in Figure 1, extends from the rear of the front section, i.e. the rear of the widening section, and comprises the extending portion of the shaft portion 11, as seen in Figure 2. The middle section extends in a direction closer to the vertical than the front section when seen in a side view. The extending portion extends in a direction generally in parallel with the longitudinal direction of the motorcycle when seen in plan view.

The rear section of the shaft portion 11, as seen in Figure 1, extends from the rear of the middle section, i.e. the rear of the extending section, and comprises the narrowing portion of the shaft portion 11, as seen in Figure 2. The narrowing portion extends in an inwards direction towards the longitudinal centre of the motorcycle, when seen in a plan view.

As can be seen from Figure 2, the insertion portion 11 a is inserted into the connecting portion 9a of the bracket 9 from a position located higher than and further rearward of the rear end of the bracket 9. Once the insertion portion 11 a is inserted in the connecting portion 9a, a bolt is inserted through a bolt hole formed in the connecting portion 9a and a bolt hole formed in the insertion portion 11 a. The bolt functions as a fixing element 14 as its insertion direction intersects with the insertion direction of the insertion portion 11a. Accordingly, the insertion portion 11a is prevented from moving relative to the connection portion by the bolt. In the present preferred embodiment, the insertion direction of the bolt is perpendicular to the insertion direction of the insertion portion 11 a. Nevertheless, it is clear to the person skilled in the art that the bolt will function as a fixing element 14 as long as its insertion direction intersects with the insertion direction of the insertion portion 11a.

From Figures 1, 2 and 5, it can be seen that a secondary shaft portion 11b extends from the middle section of the shaft portion 11 in an approximately vertical direction when seen in a side view. Accordingly, the secondary shaft portion 11b is located in front of the narrowing portion of the shaft portion 11.

When seen in a plan view, both the narrowing portion of the shaft portion 11 and the secondary shaft portion 11 b further extend in a generally widthwise direction of the motorcycle. In the present preferred embodiment, a platform 12a is attached to the narrowing portion and the secondary shaft portion 11 b. The load carrying portion of the present invention comprises the combination of the platform 12a, the narrowing portion and the secondary shaft portion 11 b.

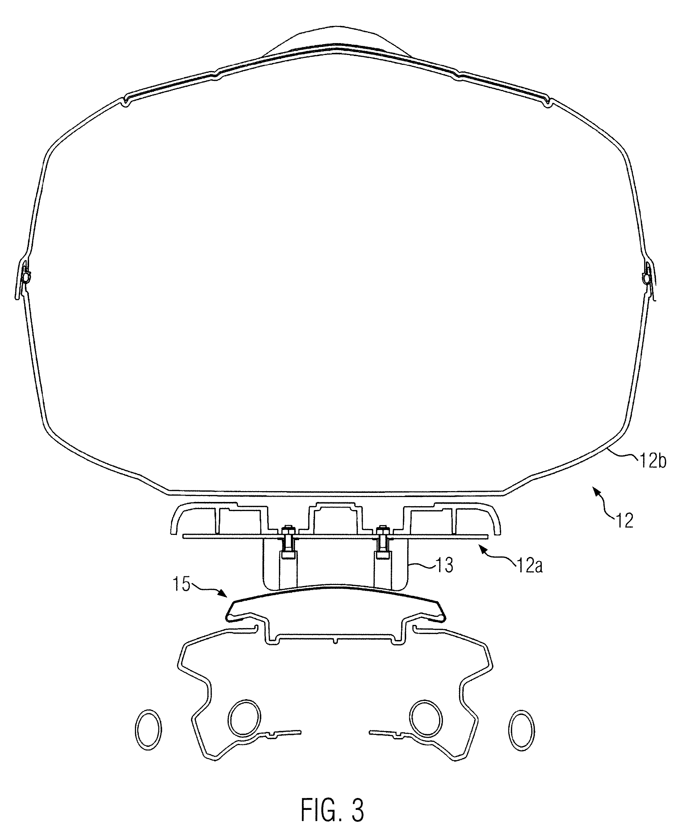

As can be seen in Figures 3 to 5, the platform 12a comprises a generally flat surface and a protrusion portion 13 formed on a bottom side of the generally flat surface. In the present preferred embodiment, the protrusion portion 13 is attached to the bottom side of the generally flat surface with bolts 13a and nuts 13 b. However the protrusion portion 13 and the generally flat surface may be attached in any other suitable manner, or may even be formed integrally. In addition, in the present preferred embodiment, a box 12b is attached to the upper side of the generally flat surface of the platform 12a. The box is partially shown in Figure 1 and is fixed to the platform 12a in a common manner, i.e. through bolts. It can be removed individually from the platform 12a or together with the load support frame 10.

The protrusion portion 13 is configured to protrude in a generally vertical direction, downwards from the generally flat surface. It can be seen in Figure 1 that the protrusion portion 13 is positioned between secondary shaft portion 11 b and the narrowing portion in the longitudinal direction of the motorcycle.

A contact surface (contact portion) 13e is formed at a lower end of the protrusion portion 13. Said contact portion is configured to contact with the secondary seat portion 16 acting as the load support portion 15.

According to the preferred embodiment discussed above, a motorcycle (straddle-type vehicle) 1 of the present invention may comprise a seat 7 and a bracket 9 supported by a body frame 2, and a load support frame 10 detachably connected to said bracket 9, wherein the seat 7 comprises a seat main portion 8 for a rider and a secondary seat portion 16 for a pillion passenger, which is positioned rearward of the seat main portion 8 and supported by the body frame 2, and the load support frame 10 includes a load carrying portion 12 configured to contact with the secondary seat portion 16.

By providing the load support frame 10 with the load carrying portion 12 configured to contact with the secondary seat portion 16, it is possible to reduce the force on the bracket 9 generated as a direct result of the mass of the load supported by the load support frame 10. Accordingly, the required size and strength of the bracket 9 can be reduced, thus resulting in a reduction in the cost of said bracket 9. Moreover, by detachably connecting the load support frame 10 to the bracket 9, attachment/detachment process is simplified.

In the present preferred embodiment, the secondary seat portion 16 acts as a load support portion 15 for the motorcycle 1. Nevertheless, it is clear that the objective of the present invention can be achieved with other configurations. For example, the load support portion 15 may entirely replace the secondary seat portion 16. Alternatively, the load support portion 15 may be located rearward of the secondary seat portion 16. Further, the load support portion 15 may be formed by a cover configured to cover the secondary seat portion 16.

According to the present preferred embodiment, the straddle type vehicle 1 is a motorcycle. Nevertheless, the present invention is clearly not limited to a motorcycle, and may be applied to any straddle type vehicle 1 having a body frame 2 which can support a bracket 9 for detachably connecting the load support frame 10. For example, the present invention may be applied to a scooter type motorcycle, a quad-type all terrain vehicle (ATV), a jet ski, a snowmobile, etc.

In addition, as the load carrying portion is located at the position rearward of the seat main portion 8 and above the secondary seat portion 16 acting as the load support portion 15, the load carrying portion can easily transfer the weight of the load to the body frame 2, whilst still providing sufficient space for at least the rider. Nevertheless, it is quite possible to achieve the object of the present invention with other arrangements between the load carrying portion and the fixing element 15. For example, the load carrying portion could be positioned in front of the load support portion 15 such that the load carrying portion transfers horizontal accelerations to the body frame 2 via the load support portion 15.

According to the preferred embodiment of the present invention, the load carrying portion comprises a protrusion portion 13 formed on a bottom side of the load carrying portion and configured to protrude toward the secondary seat portion 16 acting as the load support portion 15, wherein the protrusion portion 13 has a contact portion formed at its lower end and configured to contact with the secondary seat portion 16 acting as the load support portion 15. Hence, the load support frame 10 does not need to be configured to precisely fit on the load carrying portion, thereby allowing easier attachment and detachment.

Nevertheless, it is clearly quite possible to achieve the object of the present invention with other configurations of the load carrying portion, as long as the load carrying portion is configured to contact with the load support portion 15. For example, a bottom side of the load carrying portion could be configured to contact directly with the load support portion 15. Alternatively, if the load carrying portion is located at a position in front of rather than above the load support portion 15, the protrusion may be fitted on a rear side of the load carrying portion, or said rear side could be configured to contact directly with the load support portion 15.

According to the preferred embodiment of the present invention, the load support portion 15 comprises the secondary seat portion 16 for a pillion passenger. Thus, not only can the motorcycle comfortably carry a pillion passenger when no additional load is required to be carried, there is no requirement to remove the secondary seat portion 16 when it is necessary to carry the additional load. This results in a structure that allows an easier, simpler and quicker attachment and detachment of the load support frame 10. However, as discussed above, it is not necessary for the load support portion 15 to comprise a secondary seat portion 16 for a pillion passenger. The motorcycle may not comprise a secondary seat portion 16 at all. Alternatively, the load support portion 15 may be formed at a location rearward of the secondary seat portion 16.

Within the preferred embodiment discussed above, the contact portion of the protrusion portion 13 is configured to contact with the secondary seat portion 16. As a result of this contact, the protrusion portion 13 can easily deform a cushion element of the seat, which allows the weight of the load to be transferred more directly to a bottom plate of the seat. However, if the load support portion 15 is formed at a location rearward of the secondary seat portion 16, or if no secondary seat portion 16 is even present, then it is clearly not necessary, or possible, for the contact portion of the protrusion portion 13 to contact with the secondary seat portion 16. This may also be the case if the load carrying portion is positioned in front of the load support portion 15.

According to the preferred embodiment discussed above, the bracket 9 has a connecting portion 9a to which the load support frame 10 is detachably connected. As such, the load support frame 10 can be even more easily attached to and detached from the bracket 9. Naturally, instead of providing the bracket 9 with the connection portion, as in the preferred embodiment, the load support frame 10 could be provided with a connecting portion.

Moreover, the load support frame 10 of the preferred embodiment comprises a shaft portion 11 extending from the connecting portion 9a of the bracket 9 to the load carrying portion. Hence, the load support frame 10 can have a light weight and be easily manufactured. Of course, the precise configuration of the load support frame 10 is completely independent of the other features that make up the motorcycle of the preferred embodiment.

Furthermore, the shaft portion 11 and the load carrying portion of the preferred embodiment are formed integrally with each other. As such, it is easier for a rider/user to handle the load support frame 10 during the attachment/detachment process. Naturally, the shaft portion 11 and the load carrying portion need not be integrally formed, and the load support frame 10 can comprise a plurality of various frame sections, including the load carrying portion.

According to the present preferred embodiment, the shaft portion 11 comprises a shaft insertion portion 11a inserted into the connecting portion 9a. With such a structure, only a simple insertion action is necessary as part of the attachment process, and thus attachment/detachment can be even better facilitated. This insertion action preferably, but not necessarily, occurs in the axial direction of the shaft portion 11. Moreover, an insertion portion 11 a need not be formed on the shaft portion 11. For example, an insertion portion could be formed on the connecting portion 9a instead. This would reduce the weight and cost of the bracket 9 even further.

The shaft insertion portion 11a and the connecting portion 9a of the preferred embodiment have circular cross-sections. As such, it is only necessary to axially align the shaft insertion portion 11 a with the connecting portion 9a, and no rotational alignment is required. Of course, any cross-section can be selected in order to achieve certain objectives, e.g. square section shafts may be more readily available. The key point is only that the cross-section of the insertion portion 11 a matches to the cross-section of the portion into which it is inserted.

According to the preferred embodiment discussed above, the motorcycle comprises a bolt that penetrates through both the shaft portion 11 and the connecting portion 9a in a direction intersecting the direction of insertion. With such a configuration, the bolt can simply and securely prevent any relative movement between the shaft portion 11 and the connecting portion 9a. Moreover, a bolt is an easily procurable, off-the-shelf product. Naturally, a feature other than a bolt may be used as a fixing element 14, such as an appropriately sized clevis pin. Alternatively, the bracket 9 and the load support frame 10 may be configured in such a manner as to negate the requirement for a fixing element 14.

Within the present preferred embodiment, the shaft portion 11 comprises a longitudinal shaft portion 11 that extends obliquely rearwards and upwards from the connecting portion 9a to the load carrying portion, when seen in a side view. Consequently, a portion of the forces generated by the load under both the vertical acceleration of gravity and the horizontal accelerations and decelerations of the straddle type vehicle 1 can be transferred to the bracket 9. Of course, said shaft portion 11 need not necessarily extend longitudinally, and the direction of extension of said shaft portion 11 would depend upon the force(s) that is (are) intended to be transferred. The shaft portion 11 could possibly extend directly upwards (vertically) or rearwards (horizontally), however it could also extend directly forwards, or obliquely forwards and upwards.

According to the preferred embodiment discussed above, the bracket 9 is located at a position below the seat main portion 8, and further forward than the load support portion 15, when seen in a side view. As such, when the majority of the force generated by the load under the vertical acceleration of gravity is transferred to the load support portion 15, it can be ensured that the major vector component of the force transferred to the bracket 9 via the load support frame 10 will be horizontal. Naturally, the position of the bracket 9 can be adjusted depending on the force(s) that is (are) intended to be transferred to said bracket 9, both independently of, and in conjunction with the configuration of the load support frame 10 and the position of the load support portion 15.

Within the present preferred embodiment, the bracket 9 is fixed to the body frame 2 using the same bolts that are also used to fix the pillion passenger foot rest to the body frame 2. Consequently, the bracket 9 itself can not only be easily attached to and detached from the body frame 2, thus enabling a retrofit of the load supporting structure, it can also be attached to the body frame 2 without the need to use additional fixing element 14s, thereby reducing the weight and costs of the load supporting structure. Of course, the present invention is not restricted to this particular configuration, and the bracket 9 may be fixed to the body frame 2 in any other suitable manner. For example, the bracket 9 may be fixed to the body frame 2 using bolts that are specific to the bracket 9, or it could be welded to the body frame 2. Alternatively, the bracket 9 may be fixed to another structural feature, such as the engine, the gearbox or the like, that is in turn fixed to the body frame 2. As a further alternative, the bracket 9 may be formed integrally with the body frame 2, or with another structural feature.

According to the preferred embodiment discussed above, the load carrying portion comprises a platform 12a attached to the load support frame 10, wherein a box is detachably attached to the platform 12a. With such a configuration, the platform 12a is capable of carrying a variety of differing loads and the box can more easily carry a plurality of smaller loads at one time, whilst simultaneously protecting them from the elements. Such a configuration greatly improves the versatility of the load supporting structure. Nevertheless, the present invention is clearly not restricted to such a structure, and the load carrying portion may comprise any suitable feature that can carry a load and transfer forces from the load to the load support portion 15 and, via the load support frame 10, the bracket 9. This could take the form of a lateral cross frame, a box attached directly to the load support frame 10, etc.

## Claims

1. A straddle type vehicle (1), comprising:
a body frame (2);
a seat supported by the body frame (2), the seat (7) comprising at least a seat main portion (8) for a rider;
a bracket (9) supported by the body frame (2);
a load support frame (10) detachably connected to the bracket (9); and
a load support portion (15) positioned rearward of the seat main portion (8) and supported by the body frame (2);
wherein the load support frame (10) includes a load carrying portion (12) configured to contact with the load support portion (15);
wherein the load carrying portion (12) is located at the position rearward of the seat main portion (8) and above the load support portion (15); and
wherein the load carrying portion (12) comprises a protrusion portion (13) formed on a bottom side of the load carrying portion (12) and configured to protrude toward the load support portion (15), the protrusion portion (13) having a contact portion (13a) formed at its lower end and configured to contact with the load support portion (15),
**characterized in that**
the load support portion (15) comprises a secondary seat portion (16) for a pillion passenger, and
the contact portion (13a) of the protrusion portion (13) is configured to contact with the secondary seat portion (16).

2. The straddle type vehicle (1) according to claim 1, wherein the bracket (9) has a connecting portion (9a) to which the load support frame (10) is detachably connected.

3. The straddle type vehicle (1) according to any claim 2, wherein the load support frame (10) comprises a shaft portion (11) extending from the connecting portion (9a) of the bracket (9) to the load carrying portion (12), the shaft portion (11) and the load carrying portion (12) preferably being formed integrally with each other.

4. The straddle type vehicle (1) according to claim 3, wherein the shaft portion (11) comprises a shaft insertion portion (11 a) inserted into the connecting portion (9a), said shaft insertion portion (11 a) and the connecting portion (9a) preferably having circular cross-sections.

5. The straddle type vehicle (1) according to claim 3, wherein the connecting portion (9a) comprises a bracket insertion portion inserted into the shaft portion (11), said bracket insertion portion and the shaft portion (11) preferably having circular cross-sections.

6. The straddle type vehicle (1) according to claim 4 or 5, further comprising a fixing element (14) configured to prevent any relative sliding movement between the shaft portion (11) and the connecting portion (9a), said fixing element (14) preferably comprising a bolt (17) that penetrates through both the shaft portion (11) and the connecting portion (9a) in a direction intersecting the direction of insertion.

7. The straddle type vehicle (1) according to any one of claims 3 to 6, wherein the shaft portion (11) comprises a longitudinal shaft portion that extends obliquely rearwards and upwards from the connecting portion (9a) to the load carrying portion (12), when seen in a side view.

8. The straddle type vehicle (1) according to any one of the preceding claims, wherein the bracket (9) is located at a position below the seat (7), preferably below the seat main portion (8) and/or further forward than the load support portion (15), when seen in a side view.

9. The straddle type vehicle (1) according to any one of the preceding claims, wherein the bracket is fixed to the body frame (2) using bolts, said bolts preferably also fixing a foot rest (18) of a pillion passenger to the body frame (2).

10. The straddle type vehicle (1) according to any one of the preceding claims, wherein the load carrying portion (12) further comprises a platform (12a) attached to the load support frame (10).

11. The straddle type vehicle (1) according to any one of the preceding claims, wherein the load carrying portion (12) comprises a box (12b) attached to the load support frame (10) or, when dependent upon claim 13, to the platform.

## Patentansprüche

1. Grätschsitzfahrzeug (1), umfassend:
einen Karosserierahmen (2);
einen Sitz, der durch den Karosserierahmen (2) abstützt ist, wobei der Sitz (7) wenigstens ein Sitzhauptteil (8) für einen Fahrer umfasst;
eine Halterung (9), die durch den Karosserierahmen (2) abstützt ist;
einen Lasttragrahmen (10), der lösbar mit der Halterung (9) verbunden ist; und
einen Lasttragabschnitt (15), der hinter dem Sitzhauptteil (8) positioniert und durch den Karosserierahmen (2) abgestützt ist;
wobei der Lasttragrahmen (10) einen Lastaufnahmeabschnitt (12) umfasst, der für den Kontakt mit den Lasttragabschnitt (15) ausgebildet ist;
wobei der Lastaufnahmeabschnitt (12) an der Position hinter dem Sitzhauptteil (8) und über dem Lasttragabschnitt (15) angeordnet ist; und
wobei der Lastaufnahmeabschnitt (12) einen Vorsprungabschnitt (13) umfasst, der auf einer unteren Seite des Lastaufnahmeabschnitt (12) vorgesehen und ausgebildet ist, um in Richtung des Lasttragabschnitts (15) vorzustehen, wobei der Vorsprungabschnitt (13) einen Kontaktabschnitt (13a) aufweist, der an seinem unteren Ende vorgesehen ist und für den Kontakt mit dem Lasttragabschnitt (15) ausgebildet ist,
**dadurch gekennzeichnet, dass**
der Lasttragabschnitt (15) ein zusätzliches Sitzteil (16) für einen Beifahrer aufweist, und
der Kontaktabschnitt (13a) des Vorsprungabschnitts (13) für den Kontakt mit dem zusätzlichen Sitzabschnitt (16) ausgebildet ist.

2. Grätschsitzfahrzeug (1) nach Anspruch 1, wobei der Halter (9) einen Verbindungsabschnitt (9a) aufweist, der mit dem Lasttragrahmen (10) lösbar verbunden ist.

3. Grätschsitzfahrzeug (1) nach Anspruch 2, wobei der Lasttragrahmen (10) einen Wellenabschnitt (11) aufweist, der sich von dem Verbindungsabschnitt (9a) des Halters (9) zu dem Lastaufnahmeabschnitt (12) erstreckt, wobei der Wellenabschnitt (11) und der Lastaufnahmeabschnitt (12) vorzugsweise fest miteinander verbunden ausgebildet sind.

4. Grätschsitzfahrzeug (1) nach Anspruch 3, wobei der Wellenabschnitt (11) einen Welleneinsetzabschnitt (11a) aufweist, der in den Verbindungsabschnitt (9a) eingesetzt ist, wobei der Welleneinsetzabschnitt (11a) und der Verbindungsabschnitt (9a) vorzugsweise kreisförmige Querschnitte aufweisen.

5. Grätschsitzfahrzeug (1) nach Anspruch 3, wobei der Verbindungsabschnitt (9a) einen Haltereinsetzabschnitt umfasst, der in den Wellenabschnitt (11) eingesetzt ist, wobei der Haltereinsetzabschnitt und der Wellenabschnitt (11) vorzugsweise kreisförmige Querschnitte aufweisen.

6. Grätschsitzfahrzeug (1) nach Anspruch 4 oder 5, das ferner ein Befestigungselement (14) umfasst, das ausgebildet ist, um jede relative Gleitbewegung zwischen dem Wellenabschnitt (11) und dem Verbindungsabschnitt (9a) zu verhindern, wobei das Befestigungselement (14) vorzugsweise eine Schraube (17) aufweist, die sowohl den Schaftabschnitt (11) als auch den Verbindungsabschnitt (9a) in einer Richtung, die die Einsetzrichtung schneidet, durchdringt.

7. Grätschsitzfahrzeug (1) nach einem der Ansprüche 3 bis 6, wobei der Wellenabschnitt (11) einen Längswellenabschnitt umfasst, der sich in Seitenansicht von dem Verbindungsabschnitt (9a) schräg nach hinten und nach oben zu dem Lastaufnahmeabschnitt (12) erstreckt.

8. Grätschsitzfahrzeug (1) nach einem der vorhergehenden Ansprüche, wobei der Halter (9) an einer Position unterhalb des Sitzes (7), in Seitenansicht vorzugsweise unterhalb des Sitzhauptteils (8) und/oder weitere vorne als der Lasttragabschnitt (15), angeordnet ist.

9. Grätschsitzfahrzeug (1) nach einem der vorhergehenden Ansprüche, wobei der Halter mit Schrauben an den Karosserierahmen (2) befestigt ist, wobei die Schrauben vorzugsweise auch eine Fußstütze (18) eines Beifahrers an den Karosserierahmen (2) befestigen.

10. Grätschsitzfahrzeug (1) nach einem der vorhergehenden Ansprüche, wobei der Lastaufnahmeabschnitt (12) ferner eine Plattform (12a) umfasst, die an dem Lasttragrahmen (10) befestigt ist.

11. Grätschsitzfahrzeug (1) nach einem der vorhergehenden Ansprüche, wobei der Lastaufnahmeabschnitt (12) ein Gehäuse (12b) umfasst, das an dem Lasttragrahmen (10) oder, wenn abhängig von Anspruch 13, an der Plattform befestigt ist.

## Revendications

1. Véhicule de type à enfourcher (1), comprenant :
un châssis (2) ;
un siège supporté par le châssis (2), le siège (7) comprenant au moins une portion de siège principale (8) pour un conducteur ;
une fixation (9) supportée par le châssis (2) ;
un cadre de support de charge (10) connecté de manière amovible à la fixation (9) ; et
une portion de support de charge (15) positionnée à l'arrière de la portion de siège principale (8) et supportée par le châssis (2) ;
dans lequel le cadre de support de charge (10) comprend une portion de portage de charge (12) configurée pour entrer en contact avec la portion de support de charge (15) ;
dans lequel la portion de portage de charge (12) est située dans une position à l'arrière de la portion de siège principale (8) et au-dessus de la portion de support de charge (15) ; et
dans lequel la portion de portage de charge (12) comprend une portion saillante (13) formée sur un coté de fond de la portion de portage de charge (12) et configurée pour ressortir vers la portion de support de charge (15), la portion saillante (13) présentant une portion de contact (13a) formée à son extrémité inférieure et configurée pour entrer en contact avec la portion de support de charge (15),
**caractérisé en ce que**
la portion de support de charge (15) comprend une portion de siège secondaire (16) pour un passager de siège arrière, et
la portion de contact (13a) de la portion saillante (13) est configurée pour entrer en contact avec la portion de siège secondaire (16).

2. Véhicule de type à enfourcher (1) selon la revendication 1, dans lequel la fixation (9) comporte une portion de connexion (9a) à laquelle est connecté le cadre de support de charge (10) de manière amovible.

3. Véhicule de type à enfourcher (1) selon la revendication 2, dans lequel le cadre de support de charge (10) comprend une portion d'axe (11) qui s'étend depuis la portion de connexion (9a) de la fixation (9) jusqu'à la portion de portage de charge (12), la portion d'axe (11) et la portion de portage de charge (12) étant formées de préférence de manière mutuellement intégrée.

4. Véhicule de type à enfourcher (1) selon la revendication 3, dans lequel la portion d'axe (11) comprend une portion d'insertion d'axe (lia) insérée dans la portion de connexion (9a), ladite portion d'insertion d'axe (11a) et la portion de connexion (9a) présentant de préférence des sections transversales circulaires.

5. Véhicule de type à enfourcher (1) selon la revendication 3, dans lequel la portion de connexion (9a) comprend une portion d'insertion de fixation insérée dans la portion d'axe (11), ladite portion d'insertion de fixation et la portion d'axe (11) présentant de préférence des sections transversales circulaires.

6. Véhicule de type à enfourcher (1) selon la revendication 4 ou 5, comprenant en outre un élément de fixation (14) configuré pour prévenir tout déplacement par glissement relatif entre la portion d'axe (11) et la portion de connexion (9a), ledit élément de fixation (14) comprenant de préférence un boulon (17) qui traverse aussi bien la portion d'axe (11) que la portion de connexion (9a) dans une direction qui intersecte la direction d'insertion.

7. Véhicule de type à enfourcher (1) selon l'une quelconque des revendications 3 à 6, dans lequel la portion d'axe (11) comprend une portion d'axe longitudinale qui s'étend en oblique vers l'arrière et vers le haut depuis la portion de connexion (9a) jusqu'à la portion de portage de charge (12), en vue de côté.

8. Véhicule de type à enfourcher (1) selon l'une quelconque des revendications précédentes, dans lequel la fixation (9) se trouve dans une position située sous le siège (7), de préférence sous la portion de siège principale (8) et/ou plus en avant que la portion de support de charge (15), en vue de côté.

9. Véhicule de type à enfourcher (1) selon l'une quelconque des revendications précédentes, dans lequel la fixation est attachée au châssis (2) à l'aide de boulons, lesdits boulons attachant de préférence aussi un repose-pied (18) d'un passager de siège arrière au châssis (2).

10. Véhicule de type à enfourcher (1) selon l'une quelconque des revendications précédentes, dans lequel la portion de portage de charge (12) comprend en outre une plate-forme (12a) attachée au cadre de support de charge (10).

11. Véhicule de type à enfourcher (1) selon l'une quelconque des revendications précédentes, dans lequel la portion de portage de charge (12) comprend un coffre (12b) attaché au cadre de support de charge (10) ou, en relation avec la revendication 13, à la plate-forme.
